(19) Europäisches Patentamt
European Patent Office
Office européen des brevets

(11) EP 4 592 898 A1

(12) DEMANDE DE BREVET EUROPEEN

(43) Date de publication:
30.07.2025 Bulletin 2025/31

(21) Numéro de dépôt: 25153041.6

(22) Date de dépôt: 21.01.2025

(51) Classification Internationale des Brevets (IPC):
G06N 3/0464 (2023.01)   G06N 3/045 (2023.01)

(52) Classification Coopérative des Brevets (CPC):
G06N 3/0464; G06N 3/045

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR
Etats d'extension désignés:
BA
Etats de validation désignés:
GE KH MA MD TN

(30) Priorité: 24.01.2024 FR 2400686

(71) Demandeur: Commissariat à l'Energie Atomique et aux Energies Alternatives
75015 Paris (FR)

(72) Inventeurs:
• TAMAAZOUSTI, Mohamed
  91191 GIF-SUR-YVETTE CEDEX (FR)
• JOLY, Pierre-Julien
  91191 GIF-SUR-YVETTE CEDEX (FR)
• CHAOUAI, Zakariya
  91191 GIF-SUR-YVETTE CEDEX (FR)

(74) Mandataire: Atout PI Laplace
Immeuble Up On
25 Boulevard Romain Rolland
CS 40072
75685 Paris Cedex 14 (FR)

(54) **MÉTHODE DE DÉTERMINATION D'UNE PRÉDICTION ROBUSTE ET D'UN INTERVALLE DE CERTIFICATION ASSOCIE A UNE TACHE DE REGRESSION**

(57) Méthode d'entrainement d'un modèle de prédiction automatique d'une grandeur physique, comprenant les étapes de :
- Recevoir (401) un modèle initial de prédiction automatique de ladite grandeur,
- Recevoir (402) un ensemble de données d'entrainement,
- Générer (403) un ensemble de données d'entrainement bruitées en ajoutant à chaque donnée de l'ensemble de données d'entrainement une valeur de bruit tirée aléatoirement,
- Pour chaque donnée de l'ensemble de données d'entrainement bruitées, exécuter (404) le modèle initial de prédiction automatique pour déterminer une prédiction principale de la grandeur physique,
- Modifier le modèle initial en remplaçant la prédiction principale de la grandeur physique par une prédiction robustifiée,
- Entraîner (405) le modèle modifié à partir de l'ensemble de données d'entrainement bruitées de manière à ce que la prédiction robustifiée soit égale à une valeur médiane de la distribution des valeurs de prédiction principale fournie par le modèle initial à partir de l'ensemble de données d'entrainement bruitées.

Figure 4

FIG.4

## Description

L'invention concerne le domaine des méthodes d'apprentissage automatique de tâches de régression ou prédiction, en particulier les méthodes d'intelligence artificielle impliquant des réseaux de neurones artificiels. L'invention concerne en particulier les applications de détection et suivi d'objets dans une séquence d'images qui visent à prédire la position d'un objet d'une classe d'objets donnée (par exemple, un individu, un véhicule) dans une image ou une séquence d'images. L'invention trouve notamment application dans le domaine de la conduite de véhicules autonomes ou dans le domaine des applications médicales impliquant de la détection d'objets dans des images médicales ou encore dans le domaine de la vidéosurveillance ou bien encore pour la détection d'objets en trois dimensions à partir d'images en 3D ou de calculs de pose de caméra en trois dimensions. Les domaines d'applications comprennent également la détection de repères faciaux pour la reconnaissance de visages ou la super-résolution.

De manière générale, l'invention peut s'appliquer pour toute tâche de régression qui couvre l'ensemble des méthodes d'analyses statistiques qui permettent d'approcher une variable à partir d'autres variables qui lui sont corrélées.

L'invention s'applique avantageusement dans le contexte de méthodes d'apprentissage supervisé pour lequel les données d'entrainement sont labellisées. L'invention s'applique par exemple à la prédiction de variables météorologiques telles que la température, l'humidité ou la viscosité de l'air. Elle s'applique également à la prédiction de réserves d'énergie, la prédiction d'un âge biologique à partir de données de santé ou encore à la prédiction d'efforts exercés sur une structure mécanique à partir de données issues de capteurs.

L'invention porte plus précisément sur la détermination d'un modèle de prédiction amélioré qui est robuste aux attaques adverses et qui produise également un indicateur de robustesse de la prédiction générée aux attaques adverses.

Par exemple, les valeurs prédites par le modèle sont les coordonnées des coins d'une boite englobante associé à un objet détecté dans une image. De manière générale, l'invention peut s'appliquer à toute donnée prédite via une tâche de régression apprise par un modèle d'intelligence artificielle pré-entrainé.

Les modèles d'intelligence artificielle, en particulier les réseaux de neurones artificiels, sont des outils qui permettent notamment de résoudre des tâches de régression pour prédire l'évolution de certaines données.

Cependant, il existe un problème général de sécurité pour ces modèles face à des attaques dites adverses qui visent à perturber le modèle pour fausser les prédictions générées sans que cela soit détectable par un utilisateur.

Autrement dit, une attaque adverse consiste à modifier légèrement les données d'entrée, de façon imperceptible par un utilisateur, mais de sorte à dégrader les prédictions générées par le modèle. Ce type d'attaque est difficile à éviter dès lors que les données d'entrée du modèle peuvent être altérées par un tiers. Cette vulnérabilité des modèles de prédiction peut entraîner des problèmes de sécurité critique dans les domaines où une précision élevée de la prédiction est souhaitée. C'est notamment le cas dans le domaine de la prédiction d'une trajectoire d'un véhicule ou de l'identification de la position d'un obstacle pour les applications liées aux véhicules autonomes qui impliquent des conséquences sur la sécurité des individus.

Il existe différents types d'attaques adverses qui peuvent impacter la fiabilité des prédictions d'un modèle d'apprentissage. Sans être exhaustif, on peut citer quatre exemples de méthodes permettant de générer des attaques adverses.

La référence [1] décrit un premier exemple de méthode dite FGSM ou « Fast Gradient Sign Method » en anglais. Elle concerne une méthode rapide pour modifier des données d'entrée d'un modèle de prédiction automatique. La méthode est décrite dans le contexte de données images. L'attaque proposée utilise le gradient de la fonction de cout pour déterminer une direction dans laquelle les intensités des pixels doivent être modifiées pour générer la perturbation la plus efficace sans altérer visuellement l'image.

Les pixels de l'image sont modifiés en ajoutant une valeur résiduelle qui dépend du gradient d'une fonction de cout.

La référence [2] décrit une variante de la méthode FGSM qui propose une approche itérative dans le calcul des altérations ajoutées aux pixels.

La référence [3] décrit une généralisation de la méthode précédente avec une initialisation de la perturbation à partir d'une distribution uniforme.

La référence [4] liste d'autres types d'attaques adverses parmi lesquelles la méthode de Carlini et Wagner qui est basée sur une recherche de la perturbation optimale via un critère à optimiser.

De manière générale, toutes les méthodes d'attaque adverse sont basées sur l'ajout de perturbations aux données d'entrée de manière à limiter l'impact visuel ou cognitif sur les données tout en dégradant les prédictions du modèle.

Il existe donc un besoin pour développer des méthodes de défense contre des attaques adverses qui visent à rendre plus robuste les modèles de prédiction automatique contre ces attaques et/ou à certifier que les prédictions fournies par ces modèles ne sont pas impactées par de telles attaques.

Il existe deux types de méthodes permettant de rendre un modèle de prédiction ou régression automatique plus robuste aux attaques adverses.

La première méthode, décrite dans la référence [5] est basée sur l'utilisation d'exemples adverses générés à partir des données d'entrainement pour rendre localement plus robuste le modèle sur ces données d'entrainement. Un exemple adverse est une donnée d'entrainement modifiée par l'ajout d'une faible perturbation de telle sorte que la prédiction fournie par le modèle à partir de la donnée d'entrainement modifiée est différente de la prédiction obtenue à partir de la donnée d'entrainement non modifiée. Autrement dit, cette méthode consiste à augmenter l'ensemble de données d'entrainement avec des données modifiées du même ordre de grandeur que des données générées via des attaques adverses. De cette façon, le modèle apprend à mieux distinguer les données altérées des données originales et à fournir des prédictions correctes même pour les données altérées.

Un inconvénient de ce type de méthode est que la précision du modèle peut être dégradée du fait de l'entrainement sur des données altérées. Par ailleurs, un modèle entraîné via cette méthode peut toujours être attaqué par une attaque adverse plus puissante. Enfin, cette méthode présente l'inconvénient d'une augmentation du temps d'entrainement du modèle.

Une seconde méthode, dite de régularisation, est décrite dans la référence [6]. Cette méthode vise à pénaliser la propagation du bruit à travers le réseau de neurones en minimisant la quantité $\|f_\theta(x + \delta) - f_\theta(x)\|_p$ où x est la donnée d'entrainement, $\delta$ est la perturbation ajoutée de faible valeur, $f_\theta$ est le modèle à robustifier et $\| \|_p$ est une norme $l_p$. Cette contrainte peut être ajoutée comme contrainte d'optimisation lors de l'entrainement du modèle $f_\theta$ afin de le rendre plus robuste aux impacts des altérations subies par les données.

Un inconvénient des méthodes de régularisation est qu'elles sont compliquées à mettre en oeuvre pour des données de grande dimension (par exemple pour des applications de super résolution). Par ailleurs, le problème d'optimisation susvisé n'est pas toujours simple à résoudre en pratique.

En plus des méthodes qui visent à rendre le modèle de régression plus robuste aux attaques adverses, il existe des méthodes dites de certification qui visent à certifier la robustesse d'un modèle.

Un premier exemple de méthode de certification concerne les méthodes basées sur des réseaux de type Lipschitz (par exemple décrite dans la référence [7]). Cette méthode propose de définir un rayon de robustesse proportionnel à l'inverse de la constante du réseau de neurones de Lipschitz. Les altérations dont la valeur est inférieure à ce rayon n'entrainent pas de dégradation des prédictions générées par le modèle.

Un inconvénient de cette méthode est qu'elle est limitée aux modèles exécutant des tâches de classification et aux réseaux de neurones de type Lipschitz.

Un autre exemple de méthode de certification est décrit dans les références [8] et [9]. Cette autre méthode est applicable aux tâches de classification et aux tâches de régression. La référence [9] décrit la détermination d'un intervalle de certification pour une tache de prédiction. Les bornes de l'intervalle sont déterminées à partir d'une méthode de Monte Carlo appliquée pour estimer des quantiles des valeurs de prédiction. Les prédictions sont générées à partir de données bruitées à l'aide d'un bruit Gaussien.

Cette méthode présente l'inconvénient de nécessiter un très grand nombre de données bruitées pour estimer les valeurs des bornes de certification avec une précision suffisante. Cela implique un cout d'exécution significatif à l'inférence dû à l'utilisation de la méthode de Monte Carlo.

Il est proposé une nouvelle méthode d'amélioration de la robustesse d'un modèle de régression automatique qui ne présente pas les inconvénients des méthodes de l'art antérieur précitées.

L'invention est basée sur la modification d'un modèle de prédiction pré-entrainé de sorte à fournir une prédiction plus robuste aux attaques qui soit égale à la valeur médiane de la distribution des valeurs de prédiction possible en cas d'altération des données d'entrée.

L'invention permet également de produire un intervalle de certification pour chaque valeur de prédiction générée.

L'invention présente notamment l'avantage d'une réduction de complexité par rapport à la méthode de Monte Carlo.

L'invention a pour objet une méthode, mise en oeuvre par ordinateur, d'entrainement d'un modèle de prédiction automatique d'une grandeur physique, la méthode comprenant les étapes de :

- Recevoir un modèle initial de prédiction automatique de ladite grandeur,

- Recevoir un ensemble de données d'entrainement,

- Générer un ensemble de données d'entrainement bruitées en ajoutant à chaque donnée de l'ensemble de données d'entrainement une valeur de bruit tirée aléatoirement,

- Pour chaque donnée de l'ensemble de données d'entrainement bruitées, exécuter le modèle initial de prédiction automatique pour déterminer une prédiction principale de la grandeur physique,

- Modifier le modèle initial en remplaçant la prédiction principale de la grandeur physique par une prédiction robustifiée,

- Entraîner le modèle modifié à partir de l'ensemble de données d'entrainement bruitées de manière à ce que la prédiction robustifiée soit égale à une valeur médiane de la distribution des valeurs de prédiction principale fournie par le modèle initial à partir de l'ensemble de données d'entrainement bruitées.

Dans une variante de réalisation, la méthode selon l'invention comprend en outre les étapes de :

- Compléter le modèle initial pour prédire en outre au moins deux valeurs de certification définissant les bornes d'au moins un intervalle de certification de la prédiction robustifiée,

- Entraîner le modèle complété à partir de l'ensemble de données d'entrainement bruitées de manière à ce que chaque valeur de certification prédite soit égale à une valeur de quantile de la distribution des valeurs de prédiction principale fournie par le modèle initial à partir de l'ensemble de données d'entrainement bruitées.

Selon un aspect particulier de l'invention, l'écart entre les deux valeurs de quantiles dépend d'une valeur maximale prédéfinie d'un rayon d'une attaque adverse appliquée aux données d'entrainement.

Selon un aspect particulier de l'invention, le modèle initial comprend une branche de prédiction principale de la grandeur physique et le modèle complété comprend en outre au moins une branche de prédiction supplémentaire entraînée pour prédire les valeurs de certification.

Selon un aspect particulier de l'invention, la seconde valeur de quantile est égale à un moins la première valeur de quantile.

Selon un aspect particulier de l'invention, le modèle modifié est entraîné en minimisant une fonction de perte de quantile fonction de la différence entre une prédiction de la grandeur physique fournie par le modèle initial à partir de l'ensemble de données d'entrainement bruitées et, respectivement, la prédiction robustifiée et chaque prédiction respective d'une valeur de certification fournie par le modèle modifié.

Selon un aspect particulier de l'invention, la fonction de perte de quantile est définie par la relation suivante :

$$\rho\big((y - \hat{y})\big)_\tau = \begin{cases} \tau(y - \hat{y}) \, si \, (y - \hat{y}) \geq 0 \\ (\tau - 1)(y - \hat{y}) \, sinon \end{cases}$$

$\tau$ est une valeur de quantile comprise entre 0 et 1, $y$ est une prédiction de la grandeur physique fournie par le modèle initial à partir de l'ensemble de données d'entrainement bruitées, $\hat{y}$ est la prédiction robustifiée ou une prédiction d'une valeur de certification fournie par le modèle modifié.

Selon un aspect particulier de l'invention, le modèle initial est pré-entrainé sur un premier ensemble de données d'entrainement et l'ensemble de données d'entrainement bruitées est obtenu en dupliquant chaque donnée du premier ensemble plusieurs fois et en ajoutant à chaque donnée une valeur de bruit tirée aléatoirement.

Selon un aspect particulier de l'invention, le modèle initial est pré-entrainé sur l'ensemble de données d'entrainement bruitées.

Selon un aspect particulier de l'invention, le modèle initial comporte une première partie entraînée pour extraire un ensemble de caractéristiques des données d'entrée et une seconde partie comprenant au moins une branche de prédiction.

Selon un aspect particulier de l'invention, la seconde partie du modèle modifié comprend une branche de prédiction principale pour prédire une prédiction robustifiée de ladite grandeur physique et au moins une branche de prédiction supplémentaire des valeurs de certification de ladite grandeur physique, les paramètres d'entrainement des branches de prédiction du modèle modifié étant initialisées aux paramètres d'entrainement de la branche de prédiction principale du modèle initial.

Selon un aspect particulier de l'invention, les données d'entrainement sont des ensembles d'images et la grandeur physique est une position d'un objet dans une image.

Selon un aspect particulier de l'invention, le modèle initial est entraîné à détecter un objet dans une image et à prédire les coordonnées d'une boite englobant l'objet.

L'invention a aussi pour objet une méthode, mise en oeuvre par ordinateur, de prédiction automatique d'une grandeur physique comprenant l'exécution du modèle de prédiction automatique modifié, entraîné au moyen de la méthode d'entrainement selon l'invention, de manière à déterminer une prédiction robustifiée de ladite grandeur physique et au moins deux valeurs de certification de ladite grandeur physique définissant au moins un intervalle de certification de ladite prédiction contre une attaque adverse.

Dans une variante de réalisation, la méthode de prédiction automatique d'une grandeur physique comprend la prédiction de plusieurs couples de valeurs de certification et la sélection de l'intervalle de certification ayant la largeur la plus faible et respectant une relation d'ordre telle que : la prédiction de la borne inférieure de l'intervalle de certification est inférieure à la prédiction de la grandeur physique elle-même inférieure à la prédiction de la borne supérieure de l'intervalle de certification.

Dans une variante de réalisation, la méthode de prédiction automatique d'une grandeur physique comprend la fourniture d'un indicateur de robustesse de la prédiction robustifiée à ladite attaque adverse, l'indicateur de robustesse étant inversement proportionnel à la largeur de l'intervalle de certification.

Selon un aspect particulier de l'invention, la grandeur physique est une position d'un objet dans une image et les données d'entrainement sont des ensembles d'images.

L'invention a aussi pour objet un dispositif de prédiction automatique d'une grandeur physique comprenant une unité de calcul configurée pour exécuter les étapes de la méthode selon l'invention et une interface d'affichage pour afficher les résultats de la méthode.

L'invention a aussi pour objet un programme d'ordinateur comprenant des instructions de code pour la mise en oeuvre de l'une des méthodes l'invention, lorsque ledit programme est exécuté sur un ordinateur ainsi qu'un support d'enregistrement lisible par ordinateur sur lequel est enregistré le programme d'ordinateur selon l'invention.

D'autres caractéristiques et avantages de la présente invention apparaîtront mieux à la lecture de la description qui suit en relation aux dessins annexés suivants.

[Fig. 1] représente un schéma d'un exemple d'architecture de modèle d'apprentissage automatique pré-entrainé pour réaliser une tâche de régression,

[Fig. 2] représente un schéma d'un module spécifique à une tâche de régression de l'architecture de la figure 1,

[Fig. 3a] représente un schéma d'architecture du modèle de la figure 2 modifié selon un premier mode de réalisation de l'invention,

[Fig. 3b] représente un schéma du modèle modifié de la figure 3a, complété avec deux branches de prédictions supplémentaires pour déterminer un intervalle de certification de la prédiction principale selon un autre mode de réalisation de l'invention,

[Fig. 4] représente un organigramme détaillant une méthode d'entrainement par réglage fin du modèle modifié de la figure 3a selon un mode de réalisation de l'invention,

[Fig. 5] représente un exemple d'application de l'invention à la détection d'objets dans une image,

L'invention consiste, à partir d'un modèle d'intelligence artificielle éventuellement entraîné ou pré-entrainé pour réaliser une tâche de régression ou prédiction d'une valeur, à modifier ce modèle pour rendre plus robuste la prédiction contre les attaques adverses. Dans un mode de réalisation particulier, l'invention consiste également à compléter le modèle puis à entraîner le modèle complété pour lui ajouter au moins deux prédictions supplémentaires correspondant aux deux bornes d'au moins un intervalle de certification associé à la prédiction. La taille de l'intervalle de certification est utilisée pour déterminer un indicateur de robustesse du modèle modifié.

Dans un mode de réalisation particulier de l'invention, le nouvel entrainement est un réglage fin ou « fine tuning » en anglais qui consiste à entraîner un modèle déjà pré-entrainé en modifiant uniquement une partie des paramètres.

Bien que l'invention est décrite par la suite dans le contexte d'un exemple spécifique appliqué à la conduite autonome et qui concerne un modèle pré-entraîné pour réaliser une détection d'objets dans une image avec prédiction des coordonnées d'une boite englobant chaque objet, l'invention n'est pas limitée à cette application ni à cet exemple particulier et peut s'appliquer pour toute tâche de régression visant à prédire l'évolution d'une donnée ou d'une variable, par exemple toute valeur caractéristique d'une position d'un objet dans une image. Les applications possibles ne sont pas limitées à la conduite autonome mais peuvent s'étendre aux domaines de l'imagerie médicale, de la télémédecine ou de la vidéosurveillance pour lesquels un besoin similaire de détection et localisation d'objets dans une image existe. De façon générale, l'invention s'applique à toute tâche de prédiction d'une grandeur physique prise parmi les grandeurs suivantes : une position d'un objet dans une image, une grandeur météorologique telle que la température, l'humidité ou la viscosité de l'air, une mesure d'énergie, une grandeur mesurée par un capteur.

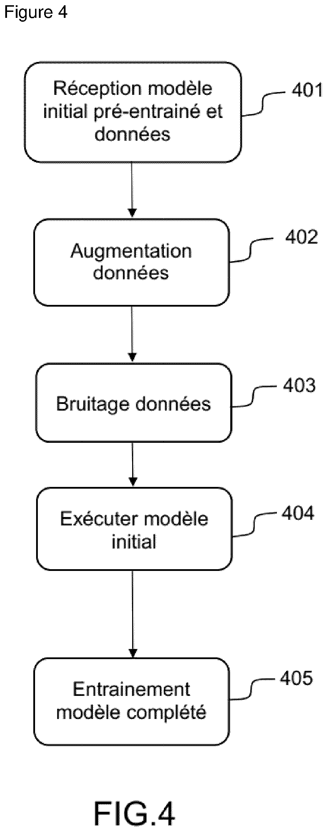

La figure 4 détaille les étapes de mise en oeuvre de la méthode selon l'invention. Elle débute à l'étape 401 avec la réception d'un modèle d'apprentissage d'une tâche de prédiction associée à un ensemble de données d'entrainement sur lequel le modèle a été pré-entrainé.

Alternativement, l'invention peut également être appliquée pour réaliser directement l'entrainement initial du modèle, dans ce cas le modèle reçu à l'étape 401 n'est pas pré-entrainé, il est initialisé avec des paramètres aléatoires.

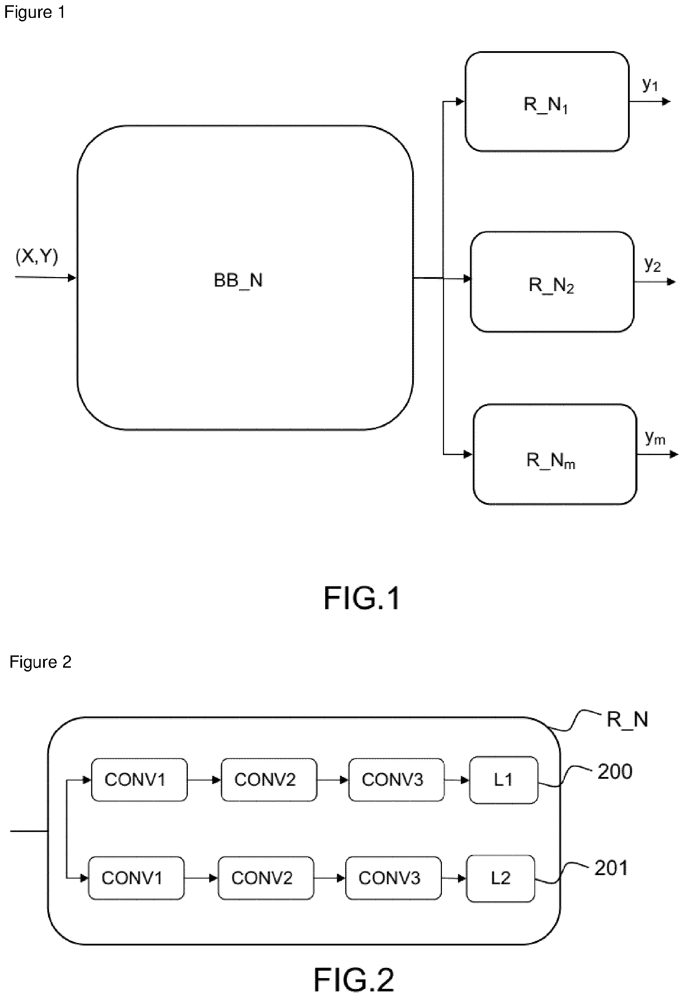

La figure 1 représente un schéma général d'un tel modèle, qui peut prendre la forme d'un réseau de neurones artificiels comprenant plusieurs couches de convolution interconnectées. De façon générale, le réseau comporte un premier sous-réseau dit « backbone » BB_N qui vise à extraire des caractéristiques pertinentes des données X reçues en entrée pour les convertir dans un espace de dimension réduite. Le processus d'entrainement du modèle est supervisé, les données X sont donc accompagnées d'un label ou annotation Y qui donnent la valeur réelle de l'information que le modèle vise à prédire. Le réseau comporte ensuite un ou plusieurs modules $R\_N_1, R\_N_2, R\_N_m$ dédiés aux tâches de régression ou prédiction de la valeur de Y à partir des données X.

Par exemple, les données d'entrée X sont des images et la variable à prédire concerne les coordonnées d'une boite englobante rectangulaire centrée sur un objet à détecter tel qu'un individu.

Les différentes branches de prédiction $R\_N_1, R\_N_2, R\_N_m$ sont par exemple entraînées pour fournir plusieurs prédictions $\hat{y_1}, \hat{y_2}, \hat{y_m}$ des coordonnées d'une boite englobante alignée sur différentes résolutions d'une grille superposée à l'image. Plus généralement, une seule branche de prédiction peut être suffisante.

La figure 2 représente un schéma plus détaillé d'un exemple de module R_N correspondant à une branche de prédiction du modèle global.

Le module R_N reçoit en entrée les caractéristiques extraites par le réseau « backbone » BB_N. Sur l'exemple de la figure 2, le module R_N comporte une branche de prédiction et une branche de classification, par exemple pour associer une classe à un objet détecté. La branche de classification peut être optionnelle.

Chacune des branches comporte plusieurs réseaux de neurones comprenant plusieurs couches de convolution interconnectées CONV1,CONV2,CONV3 selon des architectures et paramétrages spécifiques au modèle. Les architectures des réseaux de neurones des deux branches de prédiction et classification peuvent être identiques ou différentes.

La première branche de prédiction 200 est entraînée via l'optimisation, par exemple la minimisation, d'une première fonction de cout L1 par rapport aux paramètres du modèle. La seconde branche de classification 201 est entraînée via l'optimisation d'une seconde fonction de cout L2.

Les méthodes d'entrainement peuvent être basées sur des techniques de rétro-propagation du gradient ou toute autre technique appropriée qui font partie des connaissances générales du domaine et ne sont pas décrites en détail ici.

Le modèle décrit aux figures 1 et 2 est pré-entrainé sur un premier ensemble de données d'entrainement pour réaliser les tâches de prédiction et classification décrites ci-dessus. Comme indiqué en préambule, un tel modèle est susceptible d'être sensible aux attaques adverses entraînant de potentielles dégradations des prédictions. Par ailleurs, ce modèle ne fournit aucune information permettant de certifier le niveau de robustesse du modèle à de telles attaques.

Pour résoudre ces inconvénients, il est proposé de modifier le modèle initial décrit à la figure 1 pour le rendre plus robuste aux attaques adverses.

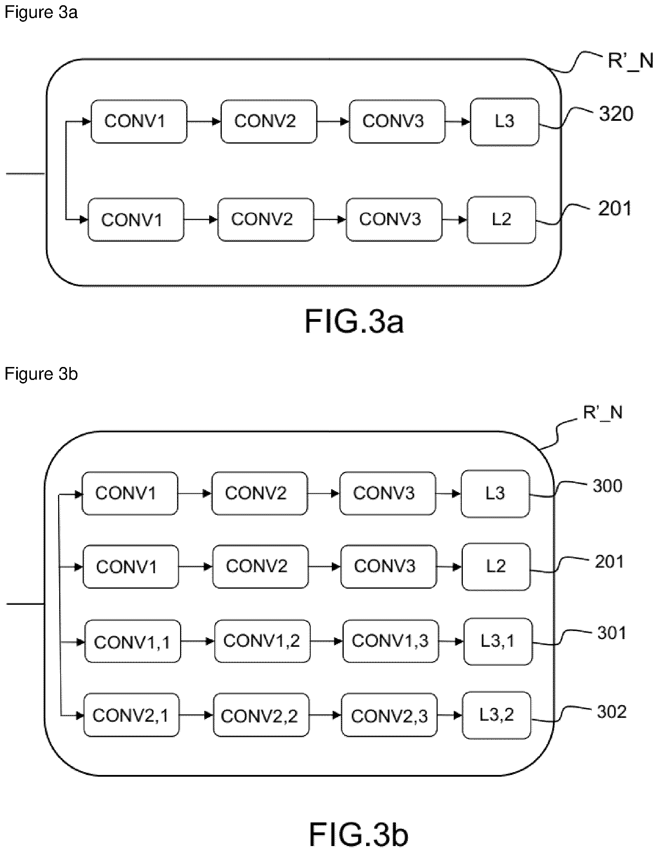

La figure 3a décrit le modèle modifié R'_N selon un premier mode de réalisation de l'invention.

Le modèle R'N est conçu à partir du modèle initial R_N éventuellement pré-entrainé. Seule la branche de prédiction 300 est modifiée par rapport à la branche de prédiction 200 du modèle initial. Cette nouvelle branche de prédiction comporte les mêmes couches de convolution, autrement dit la même architecture mais elle est optimisée via l'optimisation d'une nouvelle fonction de cout L3 qui sera décrite par la suite.

L'entrainement du modèle modifié R'_N permet de générer une prédiction de même nature que le modèle initial mais qui est plus robuste aux attaques adverses.

La figure 4 décrit la méthode d'entrainement du modèle modifié R'_N selon un mode de réalisation de l'invention.

A l'étape 401, le modèle initial R_N est pré-entrainé et on fixe les paramètres obtenus pour la branche de classification 201. Selon un autre mode de réalisation, le modèle reçu à l'étape 401 n'est pas pré-entrainé dans ce cas ses paramètres sont initialisés à des valeurs prédéfinies.

Dans le cas où le modèle initial est pré-entrainé, la méthode se poursuit à l'étape 402. Le premier ensemble de données d'entrainement utilisé pour entraîner le modèle initial R_N est augmenté, par exemple en dupliquant chaque image du premier ensemble un nombre M de fois, où M est un entier au moins égal à 2. On obtient ainsi un deuxième ensemble de données d'entrainement augmenté.

A l'étape 403, on applique une valeur de bruit, tirée aléatoirement, à chaque pixel de chaque image du deuxième ensemble afin de générer un troisième ensemble de données d'entrainement bruitées. Ainsi, le troisième ensemble comprend plusieurs versions de chaque image perturbée avec différentes répartitions de bruit.

Selon un autre mode de réalisation, le modèle initial R_N est pré-entrainé sur les mêmes données bruitées que celles obtenues à l'étape 403. Alternativement, le niveau de bruit appliqué aux données pour pré-entrainer le modèle initial R_N est différent de celui appliqué à l'étape 403, par exemple, il est plus faible ou il varie progressivement d'une valeur nulle vers une valeur correspondant au niveau de bruit appliqué à l'étape 403.

Le bruit aléatoire est par exemple un bruit blanc Gaussien de variance prédéterminée mais peut être un bruit aléatoire tiré selon une autre distribution.

Le but de l'opération 403 est de bruiter les données afin de générer une distribution des valeurs des données avec un écart type de l'ordre du niveau de bruit. La variance du bruit ajouté est par exemple comprise entre $10^{-3}$ et $10^{-1}$ en considérant que la valeur des pixels est normalisée entre 0 et 1.

A l'étape 404, on exécute le modèle initial pour l'ensemble des données bruitées du troisième ensemble produit à l'étape 403. On obtient pour chaque image, une

prédiction $\widehat{y_p}$ des coordonnées de chaque boite englobante, ou plus généralement une prédiction de la position d'un objet dans l'image.

A l'étape 405, on entraine, par réglage fin, le modèle modifié R'_N (ou uniquement la nouvelle branche de prédiction 300), à partir du troisième ensemble de données augmentées bruitées de sorte à prédire une nouvelle valeur de prédiction $\widehat{y_{p,m}}$ plus robuste. Dans un mode de réalisation particulier, les valeurs des hyper-paramètres de la nouvelle branche de prédiction sont initialisées aux mêmes valeurs que celles de la branche de prédiction initiale 200.

La nouvelle branche de prédiction 300 est entraînée via la minimisation d'une fonction de perte ou fonction de cout particulière.

Cette fonction de cout est donnée par la relation suivante :

$$\rho(u)_\tau = \begin{cases} \tau.u & si \quad u \geq 0 \\ (\tau - 1).u & sinon \end{cases}$$

La minimisation de la fonction de cout $\rho(u)_\tau$ pour $u = (\widehat{y_p} - \widehat{y_{p,m}})$ et $\tau$ =0.5 permet de faire en sorte que la nouvelle prédiction $\widehat{y_{p,m}}$ qui minimise cette fonction soit égale au quantile d'ordre $\tau$ = 0.5 de la distribution des valeurs de y. Cette propriété est notamment démontrée dans la référence [10]. Ainsi, la nouvelle prédiction $\widehat{y_{p,m}}$ fournie par le modèle modifié correspond au quantile d'ordre 0.5 de la distribution des valeurs de la prédiction y.

Le quantile d'ordre 0.5 correspond à la valeur médiane de cette distribution. La nouvelle prédiction $\widehat{y_{p,m}}$ est donc assurée de correspondre à la valeur médiane de la distribution des prédictions quelles que soient les variations subies par les données d'entrée. De cette façon, on assure que, même en cas d'attaque adverse, la prédiction restera proche de la valeur médiane des prédictions obtenues en l'absence d'attaque et ne déviera pas significativement de cette valeur médiane. A l'inverse, lorsque les données d'entrée ne sont pas altérées, la prédiction médiane $\widehat{y_{p,m}}$ est sensiblement identique à la prédiction fournie par le modèle initial.

Dans un mode de réalisation particulier de l'invention, le modèle modifié R'_N est en outre complété par l'ajout d'au moins deux branches de prédictions supplémentaires 301,302 tel que schématisé à la figure 3b.

Ces deux branches de prédiction sont similaires à la branche de prédiction principale 300 en ce qu'elles comportent plusieurs réseaux de neurones comprenant plusieurs couches de convolution interconnectées CONV1,1 ; CONV1,2 ; CONV1,3 ; CONV2,1 ; CONV2,2 ; CONV2,3. Chacune des branches supplémentaires 301,302 de prédiction est entraînée via l'optimisation d'une fonction de cout particulière L3,1 ; L3,2 qui sera décrite plus en détail par la suite.

Les deux prédictions supplémentaires correspondent aux bornes d'un intervalle de certification autour de la prédiction principale. Cet intervalle de certification permet de certifier que la prédiction principale est toujours contenue dans cet intervalle.

L'entrainement de chacune des branches de prédiction supplémentaire 301,302 est réalisé via la même méthode d'entrainement décrite à la figure 4 déjà utilisée pour la prédiction principale 300, à la différence près que la valeur de quantile de la fonction de cout est différente.

Dans un premier mode de réalisation, cette valeur de quantile est déterminée en fonction du rayon maximal d'une attaque adverse contre laquelle le modèle modifié doit être robuste.

La valeur de quantile $\tau_{inf}$ est prise dans l'intervalle ]0 ; 0.5[ pour la prédiction de la borne inférieure de l'intervalle de certification et est prise à la valeur $\tau_{sup}$ = 1 - $\tau_{inf}$ pour la prédiction de la borne supérieure de l'intervalle.

Selon un exemple de réalisation, les deux valeurs de quantile sont prises respectivement égales à

$$\tau_{inf} = \phi(-\frac{\varepsilon}{\sigma}) \text{ et } \tau_{sup} = \phi(\frac{\varepsilon}{\sigma})$$

, avec $\varepsilon$ le rayon maximal de l'attaque adverse et $\sigma$ l'écart type du bruit ajouté aux données à l'étape 403.

$\Phi$ est la fonction de répartition d'une loi normale centrée réduite entre 0 et 1.

Le modèle entraîné de la figure 3b génère une prédiction d'un intervalle de certification de la prédiction principale. Autrement dit ce modèle permet de certifier que la valeur de la prédiction principale varie toujours dans l'intervalle de certification même en cas d'attaque adverse de rayon maximal égal à $\varepsilon$.

Dans une variante de réalisation de l'invention, un indicateur de robustesse est fourni par le modèle R'_N de sorte à quantifier le niveau de robustesse du modèle aux attaques adverses. Cet indicateur de robustesse est inversement proportionnel à la largeur de l'intervalle de certification. Autrement dit, si l'intervalle de certification est large, cela signifie qu'en cas d'attaque adverse, la prédiction peut varier dans une plage de variations large ce qui signifie que le modèle est peu robuste. A l'inverse, si l'intervalle de certification est étroit, cela traduit une robustesse importante du modèle aux attaques adverses.

Dans un autre mode de réalisation de l'invention, le rayon maximum de l'attaque adverse n'est pas connu, dans ce cas, le modèle R'_N est conçu pour prédire plusieurs couples de valeurs de quantiles différentes correspondant chacun à un intervalle de certification différent.

Par exemple, la valeur de quantile inférieure est prise égale à une valeur de l'intervalle ]0 ; 0.5[ en balayant cet intervalle par pas régulier. Par exemple, le pas de variation est choisi égal à 0.1 ou 0.01. Alternativement, les valeurs choisies ne sont pas régulièrement réparties dans cet intervalle.

Les différentes prédictions de quantiles sont obtenues via plusieurs branches de prédictions supplémentaires auquel cas le modèle de la figure 3b est complété avec autant de branches supplémentaires que de prédictions ou une seule branche de prédiction génère toutes les valeurs de quantiles supplémentaires directement.

Lorsque le modèle est exécuté en inférence, on vérifie, pour chaque intervalle de certification, si les relations d'ordre sont respectées pour les deux bornes de l'intervalle et la prédiction principale médiane.

Autrement dit, lorsque les données ne sont pas corrompues, on doit s'attendre à ce que la relation d'ordre

suivante soit respectée :

$$\widehat{y_{p,inf}} < \widehat{y_{p,m}} < \widehat{y_{p,sup}} \ .$$

En cas d'attaque adverse avec un rayon d'attaque élevé, les relations d'ordre pour les quantiles les plus proches de la médiane (c'est-à-dire ceux pour lesquels l'intervalle de certification a la largeur la plus faible) peuvent ne plus être respectées du fait d'une corruption des prédictions.

Dans ce cas, on sélectionne l'intervalle de certification final comme étant l'intervalle de plus faible largeur qui respecte la relation d'ordre entre les trois prédictions ci-dessus.

Cette information supplémentaire permet de garantir à un utilisateur du modèle un niveau de robustesse donné.

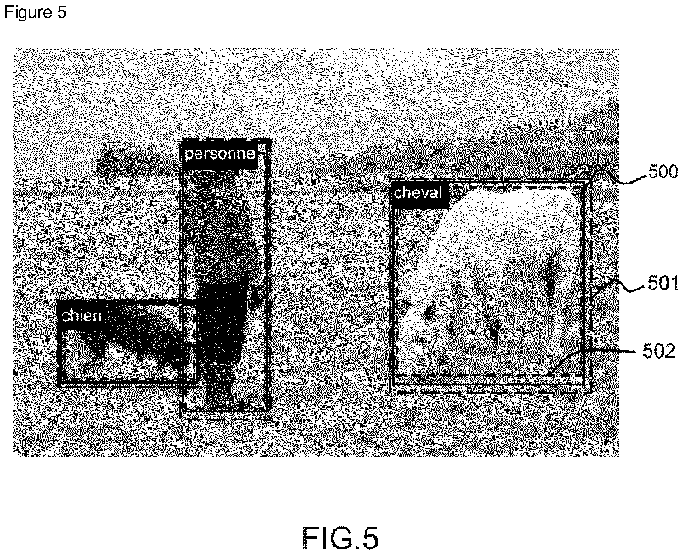

La figure 5 montre un exemple de résultat obtenu par l'exécution de l'invention pour une application de détection d'objets dans une image. Selon cet exemple, le modèle initial est entraîné à prédire les coordonnées de boites englobantes encadrant un objet, par exemple une personne ou un animal (cheval ou chien sur l'exemple de la figure 5), l'objet étant par ailleurs classifié via une tâche de classification. Par ailleurs, l'image fournie en entrée du modèle a été perturbée par une attaque adverse.

La figure 5 montre, pour chaque objet détecté (une personne, un chien, un cheval), une prédiction principale 500 qui correspond à la prédiction robuste médiane de l'image attaquée et deux prédictions secondaires 501,502 correspondant aux bornes de l'intervalle de certification. La visualisation de ces deux prédictions secondaires permet à l'utilisateur de déterminer le niveau de robustesse du modèle. Sur cet exemple, les valeurs des quantiles pour entraîner les branches de prédictions secondaires sont fixées respectivement à 0.4 et 0.6.

Sans sortir du cadre de l'invention, les différentes branches de prédiction supplémentaires 301,302 peuvent être remplacées par une branche de prédiction unique entraînée pour prédire directement les deux valeurs de certification correspondant aux deux bornes de l'intervalle de certification.

Alternativement, les deux valeurs de certification prédites peuvent également être ajoutées directement à la branche de prédiction principale 300 sans nécessité d'ajouter des branches de prédiction supplémentaires au modèle.

L'invention peut être mise en oeuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

L'invention peut être implémentée sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Références

[1] I. Goodfellow, J. Shlens, C. Szegedy. Explaining and harnessing adversarial examples.arXiv preprint-tarXiv:1412.6572. 2014.

[2] A. Kurakin, I. Goodfellow, and S. Bengio. Adversarial examples in the physical world.arXiv preprint-tarXiv:1607.02533, 2016.

[3] A. Madry, A. Makelov, L. Schmidt, D. Tsipras, and A. Vladu,Towards deep learning models résistant to adversarial attacks, arXiv preprint arXiv:1706.06083, 2017.

[4] K. Ren, T. Zheng, Z. Qin, and X. Liu, Adversarial attacks and defenses in deep learning, Engineering, vol. 6, no. 3, pp. 346-360, 2020.

[5] I. Goodfellow, J. Shlens, C. Szegedy. Explaining and harnessing adversarial examples.arXiv preprintarXiv:1412.6572. 2014.

[6] D. Jakubovitz, R. Giryes. Improving DNN robustness to adversarial attacks using Jacobian regularization. In Proceedings of the European Conférence on Computer Vision (ECCV). 514-529, 2018.

[7] Q. Li, S. Haque, C. Anil, J. Lucas, R.B. Grosse, J.H. Jacobsen, Preventing gradient atténuation in lipschitz constrained convolutional networks. Advances in neural information processing systems, (2019),32.

[8] J. Cohen, E. Rosenfeld, Z. Kolter, Certified adversarial robustness via randomized smoothing. In International Conférence on Machine Learning, (2019), pp. 1310-1320. PMLR.

[9] P.Y. Chiang, M. Curry, A. Abdelkader, A. Kumar, J. Dickerson, T. Goldstein, Détection as régression: Certified object détection with médian smoothing. Advances in Neural Information Processing Systems, 33, 2020, pp. 1275-1286.

[10] Thomas S Ferguson. Mathematical statistics: A decision theoretic approach. Academic press, 2014.

## Revendications

1. Méthode, mise en oeuvre par ordinateur, d'entrainement d'un modèle de prédiction automatique d'une grandeur physique prise parmi les grandeurs suivantes : une position d'un objet dans une image, une grandeur météorologique telle que la température, l'humidité ou la viscosité de l'air, une mesure d'énergie, une grandeur mesurée par un capteur, la méthode comprenant les étapes de :

   - Recevoir (401) un modèle initial de prédiction automatique de ladite grandeur,
   - Recevoir (402) un ensemble de données d'entrainement,
   - Générer (403) un ensemble de données d'entrainement bruitées en ajoutant à chaque donnée de l'ensemble de données d'entrainement une valeur de bruit tirée aléatoirement,
   - Pour chaque donnée de l'ensemble de données d'entrainement bruitées, exécuter (404) le modèle initial de prédiction automatique pour déterminer une prédiction principale de la grandeur physique,
   - Modifier le modèle initial en remplaçant la prédiction principale de la grandeur physique par une prédiction robustifiée,
   - Entraîner (405) le modèle modifié à partir de l'ensemble de données d'entrainement bruitées de manière à ce que la prédiction robustifiée soit égale à une valeur médiane de la distribution des valeurs de prédiction principale fournie par le modèle initial à partir de l'ensemble de données d'entrainement bruitées,

2. le modèle modifié étant entraîné en minimisant une fonction de perte de quantile fonction de la différence entre une prédiction de la grandeur physique fournie par le modèle initial à partir de l'ensemble de données d'entrainement bruités et la prédiction robustifiée. Méthode d'entrainement d'un modèle de prédiction automatique selon la revendication 1 comprenant en outre les étapes de :

   - Compléter le modèle initial pour prédire en outre au moins deux valeurs de certification définissant les bornes d'au moins un intervalle de certification de la prédiction robustifiée,
   - Entraîner le modèle complété à partir de l'ensemble de données d'entrainement bruitées de manière à ce que chaque valeur de certification prédite soit égale à une valeur de quantile de la distribution des valeurs de prédiction principale fournie par le modèle initial à partir de l'ensemble de données d'entrainement bruitées.

3. Méthode d'entrainement d'un modèle de prédiction automatique selon la revendication 2 dans laquelle l'écart entre les deux valeurs de quantiles dépend d'une valeur maximale prédéfinie d'un rayon d'une attaque adverse appliquée aux données d'entrainement.

4. Méthode d'entrainement d'un modèle de prédiction automatique selon l'une quelconque des revendications 2 ou 3 dans laquelle le modèle initial comprend une branche de prédiction principale (300) de la grandeur physique et le modèle complété comprend en outre au moins une branche de prédiction supplémentaire (301,302) entraînée pour prédire les valeurs de certification.

5. Méthode d'entrainement d'un modèle de prédiction automatique selon l'une quelconque des revendications 2 à 4 dans laquelle la seconde valeur de quantile est égale à un moins la première valeur de quantile.

**6.** Méthode d'entrainement d'un modèle de prédiction automatique selon l'une quelconque des revendications précédentes dans laquelle le modèle modifié est en outre entraîné en minimisant une fonction de perte de quantile fonction de la différence entre une prédiction de la grandeur physique fournie par le modèle initial à partir de l'ensemble de données d'entrainement bruitées et, chaque prédiction respective d'une valeur de certification fournie par le modèle modifié.

**7.** Méthode d'entrainement d'un modèle de prédiction automatique selon l'une quelconque des revendications précédentes dans laquelle la fonction de perte de quantile est définie par la relation suivante :

$$\rho\big((y - \hat{y})\big)_\tau = \begin{cases} \tau(y - \hat{y}) \, si \, (y - \hat{y}) \geq 0 \\ (\tau - 1)(y - \hat{y}) \, sinon \end{cases}$$

$\tau$ est une valeur de quantile comprise entre 0 et 1, *y* est une prédiction de la grandeur physique fournie par le modèle initial à partir de l'ensemble de données d'entrainement bruitées, $\hat{y}$ est la prédiction robustifiée ou une prédiction d'une valeur de certification fournie par le modèle modifié.

**8.** Méthode d'entrainement d'un modèle de prédiction automatique selon l'une quelconque des revendications précédentes dans laquelle le modèle initial est pré-entrainé sur un premier ensemble de données d'entrainement et l'ensemble de données d'entrainement bruitées est obtenu en dupliquant chaque donnée du premier ensemble plusieurs fois et en ajoutant à chaque donnée une valeur de bruit tirée aléatoirement.

**9.** Méthode d'entrainement d'un modèle de prédiction automatique selon l'une des revendications 1 à 7 dans laquelle le modèle initial est pré-entrainé sur l'ensemble de données d'entrainement bruitées.

**10.** Méthode d'entrainement d'un modèle de prédiction automatique selon l'une quelconque des revendications précédentes dans laquelle le modèle initial comporte une première partie entraînée pour extraire un ensemble de caractéristiques des données d'entrée et une seconde partie comprenant au moins une branche de prédiction.

**11.** Méthode d'entrainement d'un modèle de prédiction automatique selon la revendication 10 dans laquelle la seconde partie du modèle modifié comprend une branche de prédiction principale pour prédire une prédiction robustifiée de ladite grandeur physique et au moins une branche de prédiction supplémentaire des valeurs de certification de ladite grandeur physique, les paramètres d'entrainement des branches de prédiction du modèle modifié étant initialisées aux paramètres d'entrainement de la branche de prédiction principale du modèle initial.

**12.** Méthode d'entrainement d'un modèle de prédiction automatique selon l'une quelconque des revendications précédentes dans laquelle les données d'entrainement sont des ensembles d'images et la grandeur physique est une position d'un objet dans une image.

**13.** Méthode d'entrainement d'un modèle de prédiction automatique selon la revendication 12 dans laquelle le modèle initial est entraîné à détecter un objet dans une image et à prédire les coordonnées d'une boite englobant l'objet.

**14.** Méthode, mise en oeuvre par ordinateur, de prédiction automatique d'une grandeur physique prise parmi les grandeurs suivantes : une position d'un objet dans une image, une grandeur météorologique telle que la température, l'humidité ou la viscosité de l'air, une mesure d'énergie, une grandeur mesurée par un capteur comprenant l'exécution du modèle de prédiction automatique modifié, entraîné au moyen de la méthode d'entrainement selon l'une quelconque des revendications précédentes de manière à déterminer une prédiction robustifiée de ladite grandeur physique et au moins deux valeurs de certification de ladite grandeur physique définissant au moins un intervalle de certification de ladite prédiction contre une attaque adverse.

**15.** Méthode de prédiction automatique d'une grandeur physique selon la revendication 14 comprenant la prédiction de plusieurs couples de valeurs de certification et la sélection de l'intervalle de certification ayant la largeur la plus faible et respectant une relation d'ordre telle que : la prédiction de la borne inférieure de l'intervalle de certification est inférieure à la prédiction de la grandeur physique elle-même inférieure à la prédiction de la borne supérieure de l'intervalle de certification.

**16.** Méthode de prédiction automatique d'une grandeur physique selon l'une quelconque des revendications 14 ou 15 comprenant la fourniture d'un indicateur de robustesse de la prédiction robustifiée à ladite attaque adverse, l'indicateur de robustesse étant inversement proportionnel à la largeur de l'intervalle de certification.

**17.** Méthode de prédiction automatique d'une grandeur physique selon l'une quelconque des revendications 14 à 16 dans laquelle la grandeur physique est une position d'un objet dans une image et les données d'entrainement sont des ensembles d'images.

**18.** Dispositif de prédiction automatique d'une grandeur physique prise parmi les grandeurs suivantes : une position d'un objet dans une image, une grandeur météorologique telle que la température, l'humidité ou la viscosité de l'air, une mesure d'énergie, une grandeur mesurée par un capteur comprenant une unité de calcul configurée pour exécuter les étapes de la méthode selon l'une quelconque des revendications 14 à 17 et une interface d'affichage pour afficher les résultats de la méthode.

**19.** Dispositif de prédiction automatique selon la revendication 18 dans lequel la grandeur physique est une position d'un objet dans une image et les données d'entrainement sont des ensembles d'images.

**20.** Programme d'ordinateur comprenant des instructions de code pour la mise en oeuvre de l'une des méthodes selon l'une quelconque des revendications 1 à 17, lorsque ledit programme est exécuté sur un ordinateur.

**21.** Support d'enregistrement lisible par ordinateur sur lequel est enregistré le programme d'ordinateur selon la revendication 20.

Figure 1

FIG.1

Figure 2

FIG.2

Figure 3a

R'_N

CONV1 → CONV2 → CONV3 → L3    320

CONV1 → CONV2 → CONV3 → L2    201

# FIG.3a

Figure 3b

R'_N

CONV1 → CONV2 → CONV3 → L3    300

CONV1 → CONV2 → CONV3 → L2    201

CONV1,1 → CONV1,2 → CONV1,3 → L3,1    301

CONV2,1 → CONV2,2 → CONV2,3 → L3,2    302

# FIG.3b

Figure 4

Réception modèle initial pré-entrainé et données — 401

Augmentation données — 402

Bruitage données — 403

Exécuter modèle initial — 404

Entrainement modèle complété — 405

FIG.4

Figure 5

FIG.5

# EP 4 592 898 A1

Europäisches Patentamt
European Patent Office
Office européen des brevets

## RAPPORT DE RECHERCHE EUROPEENNE

Numéro de la demande

EP 25 15 3041

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SUI YONGDUO ET AL: "Towards Robust Detection and Segmentation Using Vertical and Horizontal Adversarial Training", 2022 INTERNATIONAL JOINT CONFERENCE ON NEURAL NETWORKS (IJCNN), IEEE, 18 juillet 2022 (2022-07-18), pages 1-8, XP034199552, DOI: 10.1109/IJCNN55064.2022.9892759 | 1-11, 14-16, 18,20,21 | INV. G06N3/0464 G06N3/045 |
| A | * page 1 - page 5; figures 1,2,5 * ----- | 12,13, 17,19 | |
| A | ALEKSANDER MADRY ET AL: "Towards Deep Learning Models Resistant to Adversarial Attacks", ARXIV.ORG, CORNELL UNIVERSITY LIBRARY, 201 OLIN LIBRARY CORNELL UNIVERSITY ITHACA, NY 14853, 19 juin 2017 (2017-06-19), XP081490567, * page 1 - page 10 * ----- | 1-21 | |
| A | PING-YEH CHIANG ET AL: "Detection as Regression: Certified Object Detection by Median Smoothing", ARXIV.ORG, CORNELL UNIVERSITY LIBRARY, 201 OLIN LIBRARY CORNELL UNIVERSITY ITHACA, NY 14853, 8 août 2020 (2020-08-08), XP081735474, * page 1 - page 7; figures 1,2 * ----- | 1-21 | DOMAINES TECHNIQUES RECHERCHES (IPC)  G06N |

Le présent rapport a été établi pour toutes les revendications

| Lieu de la recherche | Date d'achèvement de la recherche | Examinateur |
|---|---|---|
| La Haye | 11 juin 2025 | Nourestani, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **I. GOODFELLOW** ; **J. SHLENS** ; **C. SZEGEDY**. Explaining and harnessing adversarial examples. ar-Xiv preprintar. *Xiv:1412.6572.*, 2014
- **A. KURAKIN** ; **I. GOODFELLOW** ; **S. BENGIO**. Adversarial examples in the physical world. *arXiv preprintarXiv:1607.02533*, 2016
- **A. MADRY** ; **A. MAKELOV** ; **L. SCHMIDT** ; **D. TSIPRAS** ; **A. VLADU**. Towards deep learning models résistant to adversarial attacks. *arXiv preprint arXiv:1706.06083*, 2017
- **K. REN** ; **T. ZHENG** ; **Z. QIN** ; **X. LIU**. Adversarial attacks and defenses in deep learning. *Engineering*, 2020, vol. 6 (3), 346-360
- **I. GOODFELLOW** ; **J. SHLENS** ; **C. SZEGEDY**. Explaining and harnessing adversarial examples. *arXiv preprintarXiv:1412.6572*, 2014
- **D. JAKUBOVITZ** ; **R. GIRYES**. Improving DNN robustness to adversarial attacks using Jacobian regularization. *Proceedings of the European Conférence on Computer Vision (ECCV)*, 2018, 514-529
- **Q. LI** ; **S. HAQUE** ; **C. ANIL** ; **J. LUCAS** ; **R.B. GROSSE** ; **J.H. JACOBSEN**. Preventing gradient atténuation in lipschitz constrained convolutional networks. *Advances in neural information processing systems*, 2019, 32
- **J. COHEN** ; **E. ROSENFELD** ; **Z. KOLTER**. Certified adversarial robustness via randomized smoothing. *International Conférence on Machine Learning*, 2019, 1310-1320
- **P.Y. CHIANG** ; **M. CURRY** ; **A. ABDELKADER** ; **A. KUMAR** ; **J. DICKERSON** ; **T. GOLDSTEIN**. Détec-tion as régression: Certified object détection with médian smoothing. *Advances in Neural Information Processing Systems*, 2020, vol. 33, 1275-1286
- **THOMAS S FERGUSON**. Mathematical statistics: A decision theoretic approach. Academic press, 2014